(19) **Europäisches Patentamt / European Patent Office / Office européen des brevets**

(11) **EP 4 597 608 A1**

(12) **EUROPEAN PATENT APPLICATION**
published in accordance with Art. 153(4) EPC

(43) Date of publication:
06.08.2025 Bulletin 2025/32

(51) International Patent Classification (IPC):
H01M 4/131 (2010.01)    H01M 4/1391 (2010.01)
H01M 4/36 (2006.01)    H01M 4/62 (2006.01)

(21) Application number: 23871742.5

(22) Date of filing: 01.09.2023

(52) Cooperative Patent Classification (CPC):
H01M 4/131; H01M 4/1391; H01M 4/36;
H01M 4/62; Y02E 60/10

(86) International application number:
PCT/JP2023/032093

(87) International publication number:
WO 2024/070502 (04.04.2024 Gazette 2024/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 29.09.2022 JP 2022157053

(71) Applicant: Panasonic Intellectual Property
Management Co., Ltd.
Kadoma-shi, Osaka 571-0057 (JP)

(72) Inventors:
• KURODA, Kosuke
  Kadoma-shi, Osaka 571-0057 (JP)
• UKA, Youichirou
  Kadoma-shi, Osaka 571-0057 (JP)

(74) Representative: Novagraaf International SA
Chemin de l'Echo 3
1213 Onex, Geneva (CH)

(54) **POSITIVE ELECTRODE FOR NONAQUEOUS ELECTROLYTE SECONDARY BATTERIES, NONAQUEOUS ELECTROLYTE SECONDARY BATTERY USING SAME, AND POSITIVE ELECTRODE SLURRY FOR POSITIVE ELECTRODES OF NONAQUEOUS ELECTROLYTE SECONDARY BATTERIES**

(57) A disclosed positive electrode is a positive electrode for a nonaqueous electrolyte secondary battery. The positive electrode includes a positive electrode current collector and a positive electrode mixture layer disposed on the positive electrode current collector. The positive electrode mixture layer contains active material particles having an average particle diameter less than 5 $\mu$m, a conductive material, a dispersant, and a binder. The active material particles include composite oxide particles and a surface modification layer formed on surfaces of the composite oxide particles and containing a boron compound. The composite oxide particles are particles of a lithium transition metal composite oxide. The conductive material includes a carbon material. The dispersant includes nitrile group-containing rubber. The binder includes a fluorine-containing polymer.

FIG. 1

**Description**

[Technical Field]

The present disclosure relates to a positive electrode for a nonaqueous electrolyte secondary battery, a nonaqueous electrolyte secondary battery using the same, and a positive electrode slurry for a positive electrode of a nonaqueous electrolyte secondary battery.

[Background Art]

Nonaqueous electrolyte secondary batteries have high output power and high energy density, and accordingly have various uses such as consumer uses and in-vehicle uses. In recent years, there are demands for nonaqueous electrolyte secondary batteries that have higher performance. Various proposals have been made for nonaqueous electrolyte secondary batteries.

Claim 1 of PTL 1 (Japanese Patent No. 7055476) describes "a positive electrode comprising a current collector and a positive electrode active material layer disposed on the current collector, wherein the positive electrode active material layer comprises a positive electrode active material, carbon nanotubes, and a binder, the binder comprises polyvinylidene fluoride which has a weight average molecular weight of 720,000 to 980,000, a BET specific surface area of the carbon nanotubes is 140 $m^2/g$ to 195 $m^2/g$, and the positive electrode satisfies the following Formula 1:

$$[\text{Formula 1}] \ 1.3 \leq B/A \leq 3.4,$$

wherein, in Formula 1, B is an amount (wt%) of the polyvinylidene fluoride in the positive electrode active material layer, and A is an amount (wt%) of the carbon nanotubes in the positive electrode active material layer."

[Citation List]

[Patent Literature]

PTL 1: Japanese Patent No. 7055476

[Summary of Invention]

[Technical Problem]

Currently, there are demands for improvement in the performance of nonaqueous electrolyte secondary batteries. However, when the capacity, which is the performance, of a battery is increased, the manufacture of the battery may no longer be easy. An object of the present disclosure is to provide a positive electrode (positive electrode for a nonaqueous electrolyte secondary battery) that has a high capacity and is easy to manufacture.

[Solution to Problem]

One aspect of the present disclosure relates to a positive electrode. The positive electrode is a positive electrode for a nonaqueous electrolyte secondary battery, including a positive electrode current collector and a positive electrode mixture layer disposed on the positive electrode current collector, wherein the positive electrode mixture layer contains active material particles having an average particle diameter less than 5 $\mu$m, a conductive material, a dispersant, and a binder, the active material particles include composite oxide particles and a surface modification layer formed on surfaces of the composite oxide particles and containing a boron compound, the composite oxide particles are particles of a lithium transition metal composite oxide, the conductive material includes a carbon material, the dispersant includes nitrile group-containing rubber, and the binder includes a fluorine-containing polymer.

Another aspect of the present disclosure relates to a nonaqueous electrolyte secondary battery. The nonaqueous electrolyte secondary battery includes the positive electrode according to the present disclosure.

Another aspect of the present disclosure relates to a positive electrode slurry for a positive electrode of a nonaqueous electrolyte secondary battery. The positive electrode slurry is a positive electrode slurry for a positive electrode of a nonaqueous electrolyte secondary battery, the positive electrode slurry including active material particles having an average particle diameter less than 5 $\mu$m, a conductive material, a dispersant, a binder, and a liquid medium, the active material particles include composite oxide particles and a surface modification layer formed on surfaces of the composite oxide particles and containing a boron compound, the composite oxide particles are particles of a lithium transition metal composite oxide, the conductive material includes a carbon material, the dispersant includes nitrile group-containing rubber, and the binder includes a fluorine-containing polymer.

[Advantageous Effects of Invention]

According to the present disclosure, it is possible to obtain a positive electrode (positive electrode for a nonaqueous electrolyte secondary battery) that has a high capacity and is easy to manufacture. Furthermore, according to the present disclosure, it is possible to obtain a nonaqueous electrolyte secondary battery in which the positive electrode is used, and a positive electrode slurry to be used to manufacture the positive electrode.

Although novel features of the present invention are described in the appended claims, the following detailed description referring to the drawings will further facilitate understanding of both the configuration and the content of the present invention as well as other objects and features of the present invention.

[Brief Description of Drawings]

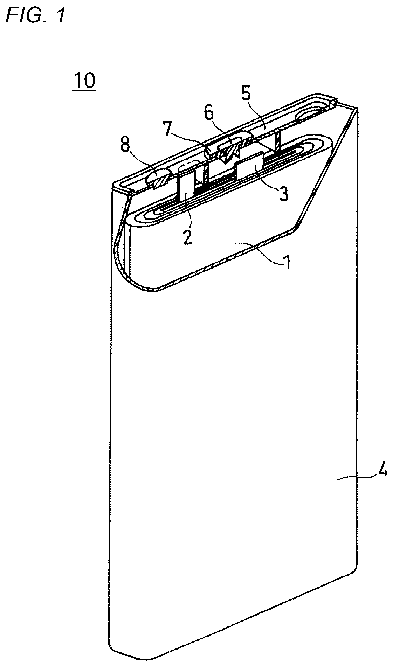

FIG. 1 is a schematic perspective view showing a nonaqueous electrolyte secondary battery according to an embodiment of the present disclosure, from which a portion has been removed.

[Description of Embodiments]

The following describes an embodiment according to the present disclosure referring to an example, but the present disclosure is not limited to the following example. In the following description, specific numerical values and materials are described as examples, but other numerical values and materials may be applied as long as effects of the present disclosure can be obtained. In the present specification, the wording "from a numerical value A to a numerical value B" refers to a range that includes the numerical values A and B, and can be read as "the numerical value A or more and the numerical value B or less". Examples of a lower limit and examples of an upper limit of numerical values relating to a specific physical property or condition described below can be combined suitably as long as the lower limit is not equal to or higher than the upper limit. When examples of constituent elements or examples of methods are listed in the following description, only one of the listed examples may be used, or two or more of the listed examples may be used in combination, unless otherwise stated.

(Positive Electrode for Nonaqueous Electrolyte Secondary Battery)

A positive electrode according to the present embodiment is a positive electrode for a nonaqueous electrolyte secondary battery. The positive electrode includes a positive electrode current collector and a positive electrode mixture layer disposed on the positive electrode current collector. The positive electrode mixture layer contains active material particles (positive-electrode active material particles) having an average particle diameter less than 5 $\mu$m, a conductive material, a dispersant, and a binder. The active material particles include composite oxide particles and a surface modification layer formed on surfaces of the composite oxide particles and containing a boron compound. The composite oxide particles are particles of a lithium transition metal composite oxide. The conductive material includes a carbon material. The dispersant includes nitrile group-containing rubber. The binder includes a fluorine-containing polymer.

Currently, there are demands for nonaqueous electrolyte secondary batteries that have higher durability and higher capacity. As a method for realizing such a nonaqueous electrolyte secondary battery, a method of increasing a charge voltage is known, but if active material particles are kept exposed to a high charge voltage, the particles crack, resulting in the occurrence of a side reaction such as the generation of gas or elution of metal from particle boundaries, and the durability deteriorates. Active material particles having a small particle diameter can be kept from cracking, and accordingly, those behaviors leading to deterioration can be suppressed, and the durability of the battery can be improved. Also, if active material particles having a small particle diameter are used, it is possible to efficiently fill a certain space with the active material particles, and to increase the capacity of the nonaqueous electrolyte secondary battery.

On the other hand, if the particle diameter of active material particles is reduced, the specific surface area of the active material particles contained in the mixture increases, and therefore, there arise problems such as a decrease in the adhesion to the current collector, a decrease in the conductivity of the positive electrode mixture, the generation of gas and a decrease in the capacity due to a side reaction with an electrolyte solution, and deterioration of the durability. If the amount of binder and the amount of conductive material are increased to solve these problems, the capacity of the battery decreases, the durability of the battery deteriorates, and there arises a new problem in that it becomes difficult to manufacture the positive electrode, for example. For example, if the amount of binder and the amount of conductive material are increased, the viscosity of a slurry used to manufacture the positive electrode significantly increases.

The inventors of the present invention newly found through studies that it is possible to solve the problems caused by the use of active material particles having a small particle diameter by combining the positive-electrode active material particles having the surface modification layer, the specific conductive material, the specific dispersant, and the specific binder. The present disclosure is based on this new finding.

Reasons why the above effects can be obtained are not clear at present. However, the positive-electrode active material particles having the surface modification layer are used in the positive electrode according to the present embodiment. Therefore, it is possible to avoid adverse effects caused by the small particle diameter (e.g., a side reaction that occurs due to an increase in the specific surface area).

Furthermore, the positive electrode according to the present embodiment exhibits a further effect obtained by including the nitrile group-containing rubber. A side reaction that increases with an increase in the specific surface area of the active material occurs at an interface between the nonaqueous electrolyte solution and the active material, and is noticeable particularly when the active material is in a charged state. The potential of the positive-electrode active material is not necessarily uniform in the secondary battery that is being charged, and the side reaction is promoted near a localized region of the secondary battery where the active material has a high potential. In particular, electron conductivity of the positive-electrode active material particles having the surface modification layer tends to decrease. Accordingly, if the positive-electrode active material particles having the surface modification layer are used in a secondary battery, variations in the potential are likely to be generated during charging. The nitrile group-containing rubber improves dispersibility of the conductive material contained in the mixture and has an effect of suppressing variations in the potential. Therefore, it is possible to suppress a side reaction that occurs due to an active material having a large specific surface area, in particular, the positive-electrode active material particles having the surface modification layer.

(Positive-Electrode Active Material)

The positive electrode mixture layer contains active material particles (positive-electrode active material particles) having an average particle diameter less than 5 $\mu$m. The active material particles having an average particle diameter less than 5 $\mu$m may be hereinafter referred to as "particles (P1)". The particles (P1) include composite oxide particles and a surface modification layer formed on surfaces of the composite oxide particles and containing a boron compound. The composite oxide particles are particles of a lithium transition metal composite oxide. The lithium transition metal composite oxide may have a layered structure (e.g., a rock salt crystal structure). Examples of the lithium transition metal composite oxide will be described later.

In the present specification, an average particle diameter is a median diameter (D50) at which a cumulative volume reaches 50% in a particle size distribution on the volume basis, unless otherwise specified. The median diameter is determined with use of a laser diffraction/scattering particle size analyzer. It is also possible to evaluate particle diameters of particles contained in the positive electrode mixture layer by observing a cross section of the positive electrode mixture layer.

In the particles (P1), a molar quantity of the boron compound contained in the surface modification layer may be 1.0 to 3.0% of a total molar quantity of metal elements other than lithium included in the lithium transition metal composite oxide. If the molar quantity is within this range, it is possible to suppress a side reaction such as the generation of gas, and the durability of the battery improves.

(Conductive Material)

The conductive material includes a carbon material. The carbon material preferably includes carbon nanotubes. If carbon nanotubes are used as the conductive material, it is possible to particularly suppress variations in the potential in the positive electrode and particularly suppress the generation of gas. Furthermore, if carbon nanotubes are used, it is possible to reduce the resistance of the positive electrode mixture layer with a small amount of addition of the carbon nanotubes. The positive electrode mixture layer may also contain a conductive material other than carbon nanotubes. Examples of such a conductive material include conductive carbon materials such as graphene, carbon black (acetylene black, ketjen black, furnace black, etc.) and other conductive carbon materials. The proportion of carbon nanotubes in all carbon materials (conductive material) is 50% by mass or more, for example, and preferably 80 to 100% by mass (e.g., 90 to 100% by mass).

The amount of carbon nanotubes contained in the positive electrode mixture layer with respect to 100 parts by mass of the positive-electrode active material may be 0.01 parts by mass or more, or 0.04 parts by mass or more, and may be 1 part by mass or less, or 0.5 parts by mass or less.

The carbon nanotubes may have an average length of 1 $\mu$m or more. In this case, the carbon nanotubes have a very large aspect ratio (ratio of the length of a fiber to its diameter). Carbon nanotubes having a large aspect ratio are likely to come into line contact with the positive-electrode active material and the current collector. Furthermore, carbon nanotubes have excellent electrical conductivity. Accordingly, it is possible to significantly reduce the DC resistance (DCR) of the battery with use of the carbon nanotubes.

From the viewpoint of increasing the electrical conductivity in the mixture layer, the average length of the carbon nanotubes is preferably 1 $\mu$m or more. On the other hand, there is no particular limitation on the upper limit of the length of the carbon nanotubes, but it is preferable that the length of the carbon nanotubes is not too large compared with the particle diameter of the positive-electrode active material. The average length of the carbon nanotubes may be 1 $\mu$m or more, or 5 $\mu$m or more, and may be 20 $\mu$m or less, or 10 $\mu$m or less. The carbon nanotubes present in the positive electrode may be bundles of a plurality of carbon nanotubes. The length of each carbon nanotube included in the bundles of carbon nanotubes is used to calculate the average length described above.

The average length of the carbon nanotubes is determined through image analysis performed with use of a scanning electron microscope (SEM). The average length of the carbon nanotubes is determined by measuring lengths of arbitrarily selected 100 carbon nanotubes and calculating an arithmetic average of the lengths. The length of each carbon nanotube is the length of the carbon nanotube extending linearly.

The average diameter of the carbon nanotubes may be 20 nm or less, or 15 nm or less, and may be 1 nm or more. If the average diameter is 20 nm or less, it is possible to obtain a high effect with a small amount of carbon nanotubes.

The average diameter of the carbon nanotubes is determined through image analysis performed with use of a transmission electron microscope (TEM). The average diameter of the carbon nanotubes can be measured with use of the following method. First, 100 carbon nanotubes are arbitrarily selected, and the diameter (outer diameter) of each of the selected carbon nanotubes is measured at an arbitrarily selected point on the carbon nanotube. Then, an arithmetic average of the measured diameters is calculated to obtain the average diameter.

The carbon nanotubes may be either single-wall carbon nanotubes (SWCNT) or multiwall carbon nanotubes (MWCNT). Examples of the multiwall carbon nanotubes include two-wall carbon nanotubes, three-wall carbon nanotubes, and carbon nanotubes having four or more walls. The positive electrode mixture layer preferably contains single-wall carbon nanotubes and/or multiwall carbon nanotubes. Multiwall carbon nanotubes contained in the positive electrode mixture layer may be multiwall carbon nanotubes of one type or multiwall carbon nanotubes of a plurality of types having different numbers of walls.

The BET specific surface area of the carbon nanotubes may be 200 $m^2$/g or more, 250 $m^2$/g or more, or 300 $m^2$/g or more. The upper limit of the BET specific surface area is not particularly limited, but may be 1,000 $m^2$/g or less. If the BET specific surface area is 200 $m^2$/g or more, it is possible to suppress variations in the potential of the active material in the mixture layer even with a small amount of addition of the carbon nanotubes. The BET specific surface area of the carbon nanotubes can be measured with use of a nitrogen adsorption method. However, in general, there is a correlation between the BET specific surface area and the fiber diameter and the fiber length of carbon nanotubes. Specifically, if the fiber diameter is 10 nm and the fiber length is 1 $\mu$m, the BET specific surface area is 200 $m^2$/g or more and 250 $m^2$/g or less. Accordingly, it is possible to calculate the BET specific surface area of the carbon nanotubes with high accuracy even in the state where the carbon nanotubes are contained in a battery.

(Dispersant)

The nitrile group-containing rubber contains a nitrile group. The nitrile group-containing rubber serves as a dispersant. Note that the nitrile group-containing rubber also serves as a binder in the positive electrode mixture layer. Examples of the nitrile group-containing rubber include a copolymer of monomers including acrylonitrile and diene (e.g., butadiene) and a hydrogenated product obtained using the copolymer as a raw material. More specifically, examples of the nitrile group-containing rubber include nitrile rubber (NBR), hydrogenated nitrile rubber (H-NBR), and modified products thereof. The nitrile group-containing rubber may have a weight average molecular weight within a range from 5,000 to 500,000.

The amount of nitrile group-containing rubber contained in the positive electrode mixture layer with respect to 100 parts by mass of the positive-electrode active material may be 0.01 parts by mass or more, or 0.05 parts by mass or more, and may be 2 parts by mass or less, or 1 part by mass or less.

(Binder)

The fluorine-containing polymer serves as a binder. The fluorine-containing polymer is a polymer containing fluorine. Examples of the fluorine-containing polymer include a vinylidene fluoride-based polymer. Examples of the vinylidene fluoride-based polymer include a polymer of monomers including vinylidene fluoride. The fluorine-containing polymer may also be a combination of a vinylidene fluoride-based polymer and another fluorine-containing polymer. The vinylidene fluoride-based polymer may be a copolymer of vinylidene fluoride and another monomer. Examples of the vinylidene fluoride-based polymer include polyvinylidene fluoride (PVDF). Other examples of the fluorine-containing polymer include polytetrafluoroethylene (PTFE), and similar effects can be obtained with use of those examples.

The amount of fluorine-containing polymer contained in the positive electrode mixture layer with respect to 100 parts by mass of the positive-electrode active material may be 0.1 parts by mass or more, or 0.5 parts by mass or more, and may be 2.0 parts by mass or less, or 1.5 parts by mass or less.

The weight average molecular weight of the fluorine-containing polymer (e.g., a vinylidene fluoride-based polymer) may be 1,000,000 or more, 1,100,000 or more, or 1,200,000 or more, and may be 2,000,000 or less, or 1,800,000 or less. If the weight average molecular weight is 1,000,000 or more, it is possible to obtain a high effect of the binder with a small amount of the fluorine-containing polymer.

The positive electrode mixture layer may also contain a component (e.g., a thickener) other than the components described above or a compound other than the compounds described above. For example, the positive electrode mixture layer may also contain polyvinylpyrrolidone, a cellulose derivative (alkyl cellulose, carboxyalkyl cellulose, salts thereof, etc.), or the like. Polymer materials such as polyvinylpyrrolidone and a cellulose derivative can serve as a dispersant or a binder.

The proportion of the positive-electrode active material in the positive electrode mixture layer is determined with use of a mixture sample. The mixture sample is obtained as follows. First, a discharged secondary battery is disassembled to take out the positive electrode. Next, the positive electrode is washed with an organic solvent and then dried in a vacuum, and thereafter only the positive electrode mixture layer is taken out and used as the mixture sample. It is possible to calculate proportions of the binder and the conductive material other than the positive-electrode active material by analyzing the mixture sample with use of TG-DTA, NMR, pyrolytic GC-MS, or the like. If the conductive material includes a plurality of types of carbon materials, the proportion of carbon nanotubes in the conductive material can be calculated by performing thermal analysis such as TG-DTA and micro-Raman spectroscopy in combination on a cross section of the positive electrode mixture layer.

The mass of the positive electrode mixture layer (single layer) per 1 $m^2$ may be 200 g or more, and is preferably 250 g or more. It is possible to increase the capacity of a lithium ion battery including the positive electrode mixture layer by setting the mass to 250 g or more. As described above, a positive electrode plate according to the present disclosure can suppress adverse effects caused by increasing the mass. The mass can be increased by increasing the thickness of the positive electrode mixture layer or the density of the positive electrode mixture layer.

The thickness of the positive electrode mixture layer is not particularly limited, but may be within a range from 50 $\mu$m to 250 $\mu$m. According to the present embodiment, it is possible to suppress an increase in the internal resistance even if the positive electrode mixture layer is made thick.

(Details of Positive-Electrode Active Material)

A substance that can absorb and release lithium ions can be used as the composite oxide constituting the positive-electrode active material. Specifically, a lithium transition metal composite oxide containing lithium and a transition metal can be used as the composite oxide constituting the positive-electrode active material. The lithium transition metal composite oxide included in the particles (P1) may be a composite oxide represented by a composition formula $Li_yNi_xM_{(1-x)}O_{2-\delta}$ (where x, y, and $\delta$ satisfy $0.6 \leq x \leq 1$, $0 < y \leq 1.2$, and $0 \leq \delta \leq 0.05$, and M includes at least one element selected from the group consisting of Co, Mn, Al, Fe, Ti, Sr, Ca, and B).

In the composition formula shown above, M may be at least one element selected from the group consisting of Co, Mn, Al, Fe, Ti, Sr, Ca, Si, Nb, Zr, Mo, Zn, and B. Alternatively, M may be at least one element selected from the group consisting of Co, Mn, Al, Fe, Ti, Sr, Ca, and B. M preferably includes at least one element selected from the group consisting of Co, Mn, Al, and Fe. Note that the value of y showing a composition ratio of lithium in the composition formula shown above increases or decreases through charging and discharging. Specific examples of the composite oxide include a lithium-nickel-cobalt-aluminum composite oxide (e.g., $LiNi_{0.9}Co_{0.05}Al_{0.05}O_2$).

It is possible to increase the battery capacity by using a high-Ni active material (a composite oxide having a high Ni content) as the positive-electrode active material. For example, it is possible to increase the battery capacity by setting x to 0.6 or more in the composition formula of the composite oxide shown above. In the composition formula, x may satisfy $0.8 \leq x \leq 1$. It is possible to particularly increase the battery capacity by setting x to 0.8 or more.

It is possible to increase the capacity of the secondary battery by using a high-Ni active material (a composite oxide having a high Ni content) as the positive-electrode active material. However, the high-Ni active material releases a large amount of lithium during charging, and accordingly, the crystal state may become unstable. In particular, if variations are generated in the potential of the active material contained in the mixture layer resulting in a localized increase in the potential, the crystal state may further become unstable and a side reaction with the nonaqueous electrolyte solution may increase. On the other hand, these influences can be mitigated by the positive-electrode active material according to the present disclosure, which has the surface modification layer.

In a particle size distribution curve (on the volume basis, for example) of all positive-electrode active material particles, a peak derived from the particles (P1) may appear within a range where the particle diameter shown on the horizontal axis is less than 5 $\mu$m. Note that the position of the peak may shift from the value of the average particle diameter, and accordingly, the peak derived from the particles (P1) may appear at a position corresponding to a particle diameter of 5

μm or more. For example, the peak derived from the particles (P1) may appear within a range where the particle diameter is 7 μm or less. The average particle diameter of the particles (P1) may be 1 μm or more. The positive electrode mixture layer may also contain other positive-electrode active material particles having an average particle diameter larger than the average particle diameter of the particles (P1). Such positive-electrode active material particles may be hereinafter referred to as "particles (P2)". In this case, two or more peaks (e.g., two peaks) may appear in the particle size distribution curve (on the volume basis, for example) of all the positive-electrode active material particles. The average particle diameter of the particles (P2) may be 8 μm or more and 20 μm or less. For example, the positive-electrode active material particles may include the particles (P1) having an average particle diameter of 1 μm or more and less than 5 μm and the particles (P2) having an average particle diameter of 8 μm or more and 20 μm or less. In this case, a peak may appear within a range from about 1 to 5 μm (particle diameter) and a peak may appear within a range from about 8 to 20 μm (particle diameter) in the particle size distribution curve (on the volume basis) of all the positive-electrode active material particles.

If the positive-electrode active material particles include only the particles (P1), the average particle diameter of all the positive-electrode active material particles is less than 5 μm. If the positive-electrode active material particles include the particles (P1) and the particles (P2), the average particle diameter of all the positive-electrode active material particles may be 5 μm or more. For example, the average particle diameter of all the positive-electrode active material particles may be within a range from 1 μm to 20 μm (e.g., from 4 μm to 17 μm).

The composite oxide particles may be constituted of at least one of single particles and secondary particles formed by agglomeration of a plurality of single particles. The single particles are primary particles that do not have particle boundaries in the particles. The secondary particles are formed by agglomeration of 2 to 1,000 single particles. The particles (P1) may be single particles. The particles (P2) may be secondary particles.

It is possible to improve a filling property of the positive electrode mixture layer with respect to the positive electrode current collector by using two types of active material particles having different average particle diameters. If the filling property is improved, the amount of the active material contained in a space increases, and accordingly, the capacity of the secondary battery increases.

Particles of the composite oxide described regarding the particles (P1) may be used as the particles (P2). Composite oxide particles included in the particles (P1) and composite oxide particles included in the particles (P2) are typically the same, but may differ from each other. Similarly to the particles (P1), the particles (P2) may include a surface modification layer formed on surfaces of the composite oxide particles and containing a boron compound. Alternatively, a configuration is also possible in which the particles (P2) do not include the surface modification layer.

The positive-electrode active material may be constituted of only the particles (P1). If the positive-electrode active material includes the particles (P1) and the particles (P2), the ratio between the particles (P1) and the particles (P2) is not particularly limited, but the proportion of the particles (P1) in the positive-electrode active material may be within a range from 10 to 50% by mass (e.g., from 15 to 30% by mass) and the proportion of the particles (P2) may be within a range from 50 to 90% by mass (e.g., 70 to 85% by mass). The proportion of positive-electrode active material particles having a particle diameter less than 5 μm in all the positive-electrode active material particles may be 10% by volume or more, 20% by volume or more, 30% by volume or more, 50% by volume or more, or 70% by volume or more, and may be 100% by volume or less, 80% by volume or less, 60% by volume, or 40% by volume or less. The proportion of positive-electrode active material particles having a particle diameter less than 5 μm in all the positive-electrode active material particles may be 10% by mass or more, 20% by mass or more, 30% by mass or more, 50% by mass or more, or 70% by mass or more, and may be 100% by mass or less, 80% by mass or less, 60% by mass, or 40% by mass or less.

Contents of elements constituting the composite oxide can be measured with use of inductively coupled plasma atomic emission spectroscopy (ICP-AES), an electron probe micro analyzer (EPMA), or energy dispersive X-ray spectroscopy (EDX), for example.

The surface modification layer containing a boron compound is formed on the surfaces of the composite oxide particles constituting the particles (P1). The boron compound is a compound that contains B (boron). If the surface modification layer containing a boron compound is formed on the surfaces of the composite oxide particles, a charge-discharge efficiency remarkably increases. It is inferred that the boron compound suppresses decomposition of the electrolyte solution and promotes Li ion exchange between the nonaqueous electrolyte and the positive-electrode active material at the surface of the lithium transition metal composite oxide. If active material particles having a small average particle diameter are used, the internal resistance of the battery is likely to increase, and accordingly, the presence of the surface modification layer is particularly important for the particles (P1). Note that the positive-electrode active material may also include LiF, $Li_2S$, or the like in addition to the lithium transition metal composite oxide.

The thickness of the surface modification layer formed on the surface of the lithium transition metal composite oxide is preferably 100 nm or less. Setting the thickness of the surface modification layer to 100 nm or less makes it easier to realize a high battery capacity. The thickness of the surface modification layer is preferably 50 nm or less, and more preferably less than 30 nm. The lower limit of the thickness of the surface modification layer is 1 nm, for example. The surface modification layer may be present like spots covering at least portions of the surface of the lithium transition metal composite oxide or may cover the entire surface of the lithium transition metal composite oxide. At a depth of 30 nm from the outermost surface of the surface modification layer, the rate of the atomic concentration of boron to the sum of atomic concentrations of transition metals contained in the lithium transition metal composite oxide is preferably 0.6 or less, and more preferably 0.5 or less. The atomic concentration of each element can be measured with use of X-ray photoelectron spectroscopy (XPS).

The boron compound contained in the surface modification layer is not particularly limited as long as the compound contains B, but is, for example, an oxidation product of boron, a boron fluoride, a boron chloride, or a boron sulfide. The boron compound is preferably an oxidation product of boron. Examples of the oxidation product of boron include boric acid ($H_3BO_3$), boron oxide ($B_2O_3$), and lithium borate ($LiBO_2$, $LiB_3O_5$, or $Li_2B_4O_7$). The boron compound present at the surface of the lithium transition metal composite oxide can be confirmed with use of low-acceleration SEM, TEM-EDX, or the like.

The molar quantity of the boron compound contained in the surface modification layer may be 0.1% or more and less than 7 mol% of the total molar quantity of metal elements other than lithium included in the lithium transition metal composite oxide. If the molar quantity is 0.1% or more, the effect of the boron compound is more remarkable. If the molar quantity is more than 7%, the battery may have a high resistance. As described above, the molar quantity may be 0.5% or more, or 1.0% or more, and may be 5.0% or less, or 3.0% or less. As described above, the molar quantity is preferably within a range from 1.0 to 3.0%.

The positive-electrode active material may include at least one metal element selected from the group consisting of Ca, Sr, Fe, Cu, Zr, Mg, Si, Cr, and Ti. These metal elements may be contained in the composite oxide particles, but are preferably present at the surfaces of the composite oxide particles. In this case, it is possible to suppress a side reaction between the composite oxide particles and the electrolyte solution and suppress deterioration of the battery. These metal elements may also be contained in the surface modification layer together with B. The positive-electrode active material may include these metal elements within a range from 0 mol% to 5 mol% (e.g., from 0.01 mol% to 1 mol%) with respect to the total amount of Ni, Mn, and Fe. The positive-electrode active material may include these metal elements within a range from 0.05 mol% to 0.2 mol% with respect to the total amount of Ni, Mn, and Fe.

The following describes an example of a method for manufacturing the particles (P1). If the particles (P2) include the surface modification layer, the particles (P2) can be manufactured with use of a method similar to the method for manufacturing the particles (P1). The method for manufacturing the particles (P1) includes, for example, a synthesis step, a washing step, a drying step, and an addition step. Note that the particles (P1) may be manufactured with use of a method other than the following method.

In the synthesis step, a metal hydroxide containing a metal element that constitutes the composite oxide particles is mixed with a Li compound and the mixture is fired to obtain the composite oxide particles (particles of a lithium transition metal composite oxide).

The metal hydroxide can be obtained by, for example, dripping an alkaline solution of sodium hydroxide or the like while stirring a solution of a metal salt including the metal element that constitutes the composite oxide particles to adjust the pH to be alkaline (e.g., 8.5 to 12.5) and cause precipitation (coprecipitation). Note that a metal oxide obtained by performing heat treatment on the metal hydroxide may also be used instead of the metal hydroxide. The smaller the particle diameter of the metal hydroxide, the further the growth of primary particles is facilitated, and therefore, the particle diameter of the metal hydroxide is preferably 7 $\mu$m or less.

Examples of the Li compound include $Li_2CO_3$, LiOH, $Li_2O_2$, $Li_2O$, $LiNO_3$, $LiNO_2$, $Li_2SO_4$, $LiOH \cdot H_2O$, LiH, and LiF. The mixing ratio between the metal hydroxide and the Li compound is preferably set such that the mole ratio between metal elements other than Li and Li falls within a range from 1:0.98 to 1:1.1, for example, to make it easy to adjust the above-described parameters so as to fall within the above-described ranges. Note that when mixing the metal hydroxide and the Li compound, it is possible to add a Ca compound, a Sr compound, a Fe compound, a Cu compound, a Zr compound, a Mg compound, a Si compound, a Cr compound, a Ti compound, a S compound, a fluoride, or the like. Examples of the Ca compound include CaO, $Ca(OH)_2$, and $CaCO_3$. Examples of the Sr compound include SrO, $Sr(OH)_2$, and $SrCO_3$. It is possible to use oxides, hydroxides, sulfides, and fluorides of the other elements as well. Alkaline earth metals and Zr have a high effect of reducing the resistance and therefore are useful.

The mixture of the metal hydroxide, the Li compound, and the like is fired in an oxygen atmosphere (e.g., while causing gas having an oxygen concentration of 80% or more to flow), for example. The firing conditions may be set such that the temperature is increased at a rate more than 1.0°C/min and 5.5°C/min or less within a range from 450°C to 680°C and the temperature reaches up to a highest temperature of 700°C or more and 850°C or less. Also, the temperature may be increased at a rate of, for example, 0.1°C/min to 3.5°C/min until the temperature reaches the highest temperature after exceeding 680°C. Also, the temperature may be kept at the highest temperature for 1 hour or more and 30 hours or less. The firing may be performed in multiple stages in the firing step, and as for a first temperature increasing rate and a second temperature increasing rate, a plurality of temperature increasing rates may also be set for each temperature range as long as the temperature increasing rates fall within the above-described ranges. It is possible to adjust the particle diameter of single particles by adjusting the firing conditions. For example, it is possible to increase the particle diameter of single particles by increasing the highest temperature.

In the washing step, the composite oxide particles obtained through the synthesis step are washed with water and dehydrated to obtain a cake-shaped composition. The washing and dehydration can be performed with use of known methods under known conditions. It is sufficient to perform washing and dehydration such that battery characteristics are kept from deteriorating due to elution of lithium from the composite oxide particles. Note that it is also possible to add, to the cake-shaped composition, a Ca compound, a Sr compound, a Fe compound, a Cu compound, a Zr compound, a Mg compound, a Si compound, a Cr compound, a Ti compound, a S compound, a fluoride, or the like.

In the drying step, the cake-shaped composition obtained through the washing step is dried to obtain a powdery composition. The drying step may be performed in a vacuum atmosphere. The drying is performed, for example, at 150°C to 400°C for 0.5 hours to 15 hours.

In the addition step, a compound containing boron, such as boric acid ($H_3BO_3$) is added to the powdery composition obtained through the drying step and the temperature is increased to 200°C to 400°C, for example. Thus, a surface modification layer containing the boron compound can be formed on the surface of the lithium transition metal composite oxide. The compound containing boron is added in an amount of 0.1 mol% to 7 mol% with respect to the total molar quantity of metal elements other than Li included in the lithium transition metal composite oxide.

The particles (P1) are obtained as described above. Note that the composite oxide particles may be manufactured with use of a method other than the synthesis step described above, and may be manufactured with use of a known method. The particles (P1) are obtained by performing the addition step described above on the manufactured composite oxide particles.

(Positive Electrode Slurry and Method for Manufacturing Positive Electrode)

A positive electrode slurry according to the present embodiment is a slurry for a positive electrode of a nonaqueous electrolyte secondary battery. This slurry is used to manufacture the positive electrode described above. Matter described for the positive electrode can be applied to the positive electrode slurry, and therefore, redundant descriptions thereof may be omitted.

The positive electrode slurry contains the above-described components of the positive electrode mixture layer and a liquid medium (dispersion medium) in which the components are dispersed. Specifically, the positive electrode slurry contains active material particles (particles (P1)) having an average particle diameter less than 5 $\mu$m, a conductive material, a dispersant, a binder, and a liquid medium. As described above, the active material particles (particles (P1)) include composite oxide particles and a surface modification layer formed on surfaces of the composite oxide particles and containing a boron compound. The composite oxide particles are particles of a lithium transition metal composite oxide. The conductive material includes a carbon material. The dispersant includes nitrile group-containing rubber. The binder includes a fluorine-containing polymer. Each component is described above, and therefore, redundant descriptions thereof are omitted. The positive electrode slurry may contain the above-described optional components.

The liquid medium (dispersion medium) is not particularly limited, and it is possible to use water, an organic solvent, or a mixed solvent thereof. Examples of the organic solvent include alcohols (e.g., ethanol), ethers (e.g., tetrahydrofuran), amides (e.g., dimethylformamide), and N-methyl-2-pyrrolidone (NMP).

In principle, the ratio between components contained in the positive electrode slurry is reflected in the ratio between those components contained in the positive electrode mixture layer. Accordingly, by changing the ratio between the components contained in the positive electrode slurry, it is possible to change the ratio between those components contained in the positive electrode mixture layer. The ratio between the components described as an example regarding the positive electrode mixture layer can be applied to the ratio between those components contained in the positive electrode slurry.

There is no particular limitation on the method for manufacturing the positive electrode, and a known method may be applied. For example, the positive electrode may be formed with use of the following method. First, the positive electrode slurry is prepared by dispersing materials of the positive electrode mixture layer (the positive-electrode active material, the conductive material, the dispersant, the binder, and other optional components as necessary) in the liquid medium. Next, the positive electrode slurry is applied to a surface of a positive electrode current collector to form a coating film, and then the coating film is dried, and thus the positive electrode mixture layer can be formed. The dried coating film may be rolled as necessary. The positive electrode mixture layer may be formed on one surface of the positive electrode current collector or on both surfaces of the positive electrode current collector.

(Conductive Material Dispersion Liquid)

The present disclosure provides a conductive material dispersion liquid. The conductive material dispersion liquid can be used to prepare the positive electrode slurry. The conductive material dispersion liquid contains a carbon material (conductive material), nitrile group-containing rubber, a fluorine-containing polymer, and a liquid medium. The carbon material, the nitrile group-containing rubber, and the fluorine-containing polymer are described above, and therefore, redundant descriptions thereof are omitted. The conductive material dispersion liquid may contain components (e.g., the above-described optional components) that are optionally contained in the positive electrode mixture layer.

The liquid medium described regarding the positive electrode slurry may be used as the liquid medium of the conductive material dispersion liquid. Alternatively, it is also possible to use a liquid medium different from the liquid medium used in the positive electrode slurry. Basically, the conductive material dispersion liquid does not contain the positive-electrode active material. The positive electrode slurry can be prepared by adding the positive-electrode active material to the conductive material dispersion liquid. The optional components and the liquid medium of the positive electrode mixture layer may also be added to the conductive material dispersion liquid together with the positive-electrode active material.

By changing the ratio between the components contained in the conductive material dispersion liquid, it is possible to change the ratio between those components contained in the positive electrode mixture layer. The ratio between the components described as an example regarding the positive electrode mixture layer can be applied to the ratio between the components contained in the conductive material dispersion liquid. Specifically, it is possible to determine the ratio between the components from the ratios of the respective components with respect to 100 parts by mass of the positive-electrode active material described as examples regarding the positive electrode mixture layer.

(Nonaqueous Electrolyte Secondary Battery)

A nonaqueous electrolyte secondary battery according to the present embodiment includes the positive electrode according to the present embodiment. The secondary battery includes at least a negative electrode and a nonaqueous electrolyte in addition to the positive electrode. The secondary battery may include the positive electrode, the negative electrode, the nonaqueous electrolyte, a separator, and an exterior body. Examples of the secondary battery include a lithium ion secondary battery, a lithium metal secondary battery, and the like. There is no particular limitation on the constituent elements other than the positive electrode mixture layer, and it is possible to use known constituent elements. The following describes examples of the constituent elements of the secondary battery.

(Positive Electrode)

The positive electrode according to the present embodiment is used as the positive electrode.

(Positive Electrode Current Collector)

The shape and the thickness of the positive electrode current collector can be selected according to an intended use, and can be selected in such a manner as to correspond to the shape and the thickness of a negative electrode current collector. Examples of the material of the positive electrode current collector include stainless steel, aluminum, an aluminum alloy, and titanium. The positive electrode mixture layer may be formed only on one surface of the positive electrode current collector or on both surfaces of the positive electrode current collector.

(Negative Electrode)

The negative electrode typically includes a negative electrode mixture layer that contains a negative-electrode active material. The negative electrode may include a negative electrode current collector and the negative electrode mixture layer disposed on the negative electrode current collector. However, in the case of a lithium metal secondary battery, a negative electrode current collector on which lithium metal or a lithium alloy can be deposited is used for the negative electrode.

The negative electrode mixture layer contains the negative-electrode active material as an essential component. The negative electrode mixture layer may also contain a binder, a thickener, a conductive material, and the like as optional components. The components described as examples of the components of the positive electrode may be used as the optional components.

The negative electrode mixture layer may be formed by applying a negative electrode slurry obtained by dispersing the constituent components of the negative electrode mixture layer in a liquid medium (dispersion medium) to a surface of the negative electrode current collector, and drying the thus formed coating film. The dried coating film may be rolled as necessary. The liquid mediums described as examples of the liquid medium of the positive electrode slurry may be used as the liquid medium. The negative electrode mixture layer may be formed only on one surface of the negative electrode current collector or on both surfaces of the negative electrode current collector.

(Negative-Electrode Active Material)

The negative-electrode active material is selected according to the type of the secondary battery. An example of the negative-electrode active material is a substance that can absorb and release lithium ions. Examples of such a substance include a carbonaceous material and a Si-containing material. The negative-electrode active material may include a Si-containing material or may be a Si-containing material. Lithium metal, a lithium alloy, or the like may also be used as the negative-electrode active material. The negative electrode may contain one type of negative-electrode active material or two or more types of negative-electrode active materials in combination.

Examples of the carbonaceous material include graphite, graphitizable carbon (soft carbon), and non-graphitizable carbon (hard carbon). One type of carbonaceous material may be used alone, or two or more types of carbonaceous materials may be used in combination. Graphite is preferable in terms of realizing excellent stability of charging and discharging and a small irreversible capacity. Examples of graphite include natural graphite, artificial graphite, and graphitized mesophase carbon particles.

Examples of the Si-containing material include Si simple substance, a silicon alloy, a silicon compound (e.g., a silicon oxide), and a composite material including silicon phases dispersed in a lithium ion conductive phase (matrix). Examples of the silicon oxide include $SiO_x$ particles. x satisfies, for example, $0.5 \leq x < 2$, and may satisfy $0.8 \leq x \leq 1.6$. It is possible to use, as the lithium ion conductive phase, at least one selected from the group consisting of a $SiO_2$ phase, a silicate phase, and a carbon phase.

A metal foil may be used as the negative electrode current collector. The negative electrode current collector may be porous. Examples of the material of the negative electrode current collector include stainless steel, nickel, a nickel alloy, copper, and a copper alloy.

(Nonaqueous Electrolyte)

The nonaqueous electrolyte (nonaqueous electrolyte solution) includes a solvent (nonaqueous solvent) and a solute dissolved in the solvent. Examples of the solute include a lithium salt. Various additives may be added to the electrolyte solution.

A known material may be used as the solvent. For example, a cyclic carbonate ester, a chain carbonate ester, a cyclic carboxylic acid ester, a chain carboxylic acid ester, or the like is used as the solvent. Examples of the cyclic carbonate ester include propylene carbonate (PC), ethylene carbonate (EC), fluoroethylene carbonate (FEC), and vinylene carbonate (VC). Examples of the chain carbonate ester include diethyl carbonate (DEC), ethyl methyl carbonate (EMC), and dimethyl carbonate (DMC). Examples of the cyclic carboxylic acid ester include γ-butyrolactone (GBL) and γ-valerolactone (GVL). Examples of the chain carboxylic acid ester include nonaqueous solvents such as methyl acetate, ethyl acetate, propyl acetate, methyl propionate (MP), and ethyl propionate (EP). One type of nonaqueous solvent may be used alone, or two or more types of nonaqueous solvents may be used in combination.

Examples of the lithium salt include a lithium salt of chlorine-containing acid ($LiClO_4$, $LiAlCl_4$, $LiB_{10}Cl_{10}$, etc.), a lithium salt of fluorine-containing acid ($LiPF_6$, $LiPF_2O_2$, $LiBF_4$, $LiSbF_6$, $LiAsF_6$, $LiCF_3SO_3$, $LiCF_3CO_2$, etc.), a lithium salt of fluorine-containing acid imide ($LiN(FSO_2)_2$, $LiN(CF_3SO_2)_2$, $LiN(CF_3SO_2)(C_4F_9SO_2)$, $LiN(C_2F_5SO_2)_2$, etc.), and a lithium halide ($LiCl$, $LiBr$, $LiI$, etc.). One type of lithium salt may be used alone, or two or more types of lithium salts may be used in combination.

The concentration of the lithium salt in the electrolyte solution may be 1 mol/L or more and 2 mol/L or less, or 1 mol/L or more and 1.5 mol/L or less. By setting the concentration of the lithium salt so as to fall within the above range, it is possible to obtain an electrolyte solution that has excellent ion conductivity and appropriate viscosity.

The electrolyte solution may contain a known additive. Examples of the additive include 1,3-propane sultone, methylbenzenesulfonate, cyclohexylbenzene, biphenyl, diphenyl ether, and fluorobenzene.

(Separator)

The separator is disposed between the positive electrode and the negative electrode. The separator preferably has a high ion permeability, appropriate mechanical strength, and appropriate insulating properties. It is possible to use a microporous thin film, woven fabric, non-woven fabric, or the like as the separator. Examples of the material of the separator include polyolefin (polypropylene, polyethylene, etc.) and other resins.

(Exterior Body)

An electrode group and the nonaqueous electrolyte are housed in the exterior body (battery case). There is no particular limitation on the exterior body, and it is possible to use a known exterior body. The electrode group is constituted of the positive electrode, the negative electrode, and the separator. There is no particular limitation on the configuration of the electrode group, and the electrode group may be a wound electrode group or a stacked electrode group. The wound electrode group is formed by winding the positive electrode and the negative electrode with the separator disposed therebetween. The stacked electrode group is formed by stacking the positive electrode and the negative electrode with the separator disposed therebetween. The shape of the nonaqueous electrolyte secondary battery is not particularly limited, and may be a cylindrical shape, a rectangular shape, a coin shape, a button shape, a laminate shape, or the like.

FIG. 1 is a schematic perspective view showing a secondary battery 10 according to an embodiment of the present disclosure, from which a portion has been removed. FIG. 1 shows a rectangular nonaqueous electrolyte battery as an example. The secondary battery 10 shown in FIG. 1 includes a battery case 4 having a rectangular tube shape with a bottom, and an electrode group 1 and a nonaqueous electrolyte (not shown) that are housed in the battery case 4.

The electrode group 1 includes a negative electrode having a long band shape, a positive electrode having a long band shape, and a separator disposed between the negative electrode and the positive electrode. A negative electrode current collector included in the negative electrode is electrically connected to a negative electrode terminal 6 provided in a sealing plate 5 via a negative electrode lead 3. The negative electrode terminal 6 is insulated from the sealing plate 5 by a resin gasket 7. A positive electrode current collector included in the positive electrode is electrically connected to the rear surface of the sealing plate 5 via a positive electrode lead 2. A peripheral edge of the sealing plate 5 is fitted to an open end portion of the battery case 4, and the fitted portion is welded with a laser. That is to say, the positive electrode is electrically connected to the battery case 4 that also serves as a positive electrode terminal. The sealing plate 5 has an inlet for the nonaqueous electrolyte. The inlet is closed with a sealing plug 8 after the nonaqueous electrolyte is poured into the battery case.

The positive electrode includes the positive electrode current collector and a positive electrode mixture layer disposed on the positive electrode current collector. The above-described positive electrode mixture layer is used as the positive electrode mixture layer.

(Supplementary Note)

The above description discloses the following technologies.

(Technology 1)

A positive electrode for a nonaqueous electrolyte secondary battery, including:

a positive electrode current collector and a positive electrode mixture layer disposed on the positive electrode current collector,
wherein the positive electrode mixture layer contains active material particles having an average particle diameter less than 5 $\mu$m, a conductive material, a dispersant, and a binder,
the active material particles include composite oxide particles and a surface modification layer formed on surfaces of the composite oxide particles and containing a boron compound,
the composite oxide particles are particles of a lithium transition metal composite oxide,
the conductive material includes a carbon material,
the dispersant includes nitrile group-containing rubber, and
the binder includes a fluorine-containing polymer.

(Technology 2)

The positive electrode according to technology 1, wherein the carbon material is carbon nanotubes.

(Technology 3)

The positive electrode according to technology 2, wherein the carbon nanotubes have a BET specific surface area of 200 m$^2$/g or more.

(Technology 4)

The positive electrode according to any one of technologies 1 to 3, wherein the fluorine-containing polymer has a weight average molecular weight of 1,000,000 or more.

(Technology 5)

The positive electrode according to any one of technologies 1 to 4, wherein, in the active material particles, a molar quantity of the boron compound contained in the surface modification layer is 1.0 to 3.0% of a total molar quantity of metal elements other than lithium included in the lithium transition metal composite oxide.

(Technology 6)

A nonaqueous electrolyte secondary battery including the positive electrode according to any one of technologies 1 to 5.

(Technology 7)

A positive electrode slurry for a positive electrode of a nonaqueous electrolyte secondary battery, the positive electrode slurry including:

active material particles having an average particle diameter less than 5 μm, a conductive material, a dispersant, a binder, and a liquid medium,
wherein the active material particles include composite oxide particles and a surface modification layer formed on surfaces of the composite oxide particles and containing a boron compound,
the composite oxide particles are particles of a lithium transition metal composite oxide,
the conductive material includes a carbon material,
the dispersant includes nitrile group-containing rubber, and
the binder includes a fluorine-containing polymer.

(Technology 8)

The positive electrode slurry according to technology 7, wherein the carbon material is carbon nanotubes.

Examples

The following specifically describes the present disclosure based on examples, but the present disclosure is not limited by the following examples. In the examples, a plurality of nonaqueous electrolyte secondary batteries including different positive electrodes were manufactured and evaluated.

(Manufacture of Battery A1)

A battery A1 was manufactured with use of the following method.

(1) Manufacture of Negative Electrode

A silicon composite material and graphite were mixed at a mass ratio of silicon composite material:graphite=5:95, and the mixture was used as a negative-electrode active material. The negative-electrode active material, carboxymethyl cellulose sodium (CMC-Na), styrene-butadiene rubber (SBR), and water were mixed at a predetermined mass ratio to prepare a negative electrode slurry. Next, the negative electrode slurry was applied to surfaces of a copper foil (negative electrode current collector) to form a laminate including the copper foil and coating films formed on the copper foil. Next, the coating films were dried, and then the laminate was rolled. Thus, a negative electrode including the copper foil and negative electrode mixture layers formed on both surfaces of the copper foil was formed.

(2) Manufacture of Positive Electrode

(2-1) Manufacture of Positive-Electrode Active Material Particles

Composite oxide particles represented by a composition formula $LiNi_{0.9}Co_{0.05}Al_{0.05}O_2$ were manufactured through the synthesis step described above. Next, the obtained composite oxide particles were washed with water to remove surplus lithium and then the particles were dried. Powdery boric acid ($H_3BO_3$) was added to the obtained particles (addition step). The molar quantity of the added boric acid was 2% of the total molar quantity of the metal elements other than Li included in the composite oxide particles. A positive-electrode active material (particles (P1)) was obtained by drying the composite oxide particles to which the boric acid had been added. The particles (P1) had an average particle diameter (D50) of 4 $\mu$m.

(2-2) Manufacture of Positive Electrode

First, a positive electrode slurry SA1 was prepared by mixing the positive-electrode active material, carbon nanotubes (conductive material), hydrogenated nitrile rubber (nitrile group-containing rubber), polyvinylidene fluoride (fluorine-containing polymer, PVDF), and N-methyl-2-pyrrolidone (liquid medium) at a predetermined mass ratio. The carbon nanotubes had an average length of 1 $\mu$m and an average diameter of 10 nm.

The carbon nanotubes were added in an amount of 0.5 parts by mass with respect to 100 parts by mass of the positive-electrode active material. The hydrogenated nitrile rubber (H-NBR) was added in an amount of 0.5 parts by mass with respect to 100 parts by mass of the positive-electrode active material. Polyvinylidene fluoride (PVDF) was added in an amount of 1 part by mass with respect to 100 parts by mass of the positive-electrode active material.

Next, the positive electrode slurry was applied to surfaces of an aluminum foil (positive electrode current collector) to form coating films, and thus a laminate including the aluminum foil and the coating films was obtained. Next, the coating films were dried, and then the laminate was rolled. Thus, a positive electrode PA1 including the aluminum foil and positive electrode mixture layers formed on both surfaces of the aluminum foil was manufactured.

(3) Preparation of Electrolyte Solution (Nonaqueous Electrolyte)

An electrolyte solution was prepared by adding $LiPF_6$ (lithium salt) to a nonaqueous solvent. The concentration of $LiPF_6$ in the electrolyte solution was 1.0 mol/L. A mixed solvent obtained by mixing ethylene carbonate (EC) and ethyl methyl carbonate (EMC) at a volume ratio of EC:EMC=3:7 was used as the nonaqueous solvent.

(4) Manufacture of Secondary Battery

Leads were respectively attached to the positive electrode and the negative electrode described above. Next, the positive electrode, the negative electrode, and a separator were spirally wound such that the separator was disposed between the positive electrode and the negative electrode, and thus an electrode group was manufactured. Next, the electrode group was inserted into an exterior body. The exterior body used was formed from a laminate film including an aluminum foil (barrier layer). Next, the exterior body into which the electrode group had been inserted was dried in a vacuum at 105°C for 2 hours, and then the nonaqueous electrolyte solution was poured into the exterior body, and an opening of the exterior body was sealed. Thus, the secondary battery A1 was manufactured.

(Manufacture of Batteries A2 to A4 and Batteries C1 to C6)

Positive electrode slurries SA2 to SA4 and SC1 to SC6 were prepared using the same method and the same conditions as the method and the conditions used to prepare the positive electrode slurry SA1 of the battery A1, except that the components contained in the positive electrode slurries and the average particle diameter of the positive-electrode active material particles were changed as shown in Table 1. Note that polyvinylidene fluorides (PVDFs) having different weight average molecular weights were used as binders. The same composite oxide as the composite oxide constituting the positive-electrode active material used in the positive electrode slurry SA1 was used as the composite oxide constituting the positive-electrode active material. Positive electrodes PA2 to PA4 and PC1 to PC6 were manufactured using the same method and the same conditions as the method and the conditions used to manufacture the positive electrode PA1 used in the battery A1, except that those positive electrode slurries were used. Batteries A2 to A4 and C1 to C6 were manufactured using the same method and the same conditions as the method and the conditions used to manufacture the battery A1, except that those positive electrodes were used. A mixture of particles having an average particle diameter of 4 $\mu$m and particles having an average particle diameter of 17 $\mu$m was used as the positive-electrode active material of the battery A3.

(Evaluation of Stability of Positive Electrode Slurry)

Stability of each of the manufactured positive electrode slurries described above was evaluated using the following method. A viscosity V0 of the slurry on the date of its manufacture and a viscosity V1 of the slurry after the slurry was left to stand for 2 days after the manufacture were measured. The viscosities of the slurry were measured with use of a B-type viscometer. Then, a viscosity change rate was calculated using the following formula.

$$\text{Viscosity change rate (\%)} = (V1/V0) \times 100$$

(Evaluation of Adhesion of Positive Electrode Mixture Layer)

The positive electrodes PA1 to PA4 and PC1 to PC5 were manufactured using the above-described method, and adhesion of the positive electrode mixture layers was evaluated. The adhesion was evaluated by measuring the strength of adhesion between the aluminum foil and the positive electrode mixture with use of a method defined in JIS (Japanese Industrial Standard) 6854-1. The measurement was performed by preparing the electrodes, all of which had the same size to make a comparison between the samples.

(Evaluation of DC Internal Resistance and Energy Density of Battery)

The DC internal resistance and energy density of each of the manufactured batteries described above were measured.

(Evaluation of Capacity Retention Rate of Battery)

The capacity retention rate of each of the manufactured batteries described above was evaluated by repeating charge-discharge cycles 30 times. More specifically, a discharge capacity E(0) before the charge-discharge cycles and a discharge capacity E(30) after the 30th charge-discharge cycle were measured, and the capacity retention rate was calculated using the following formula.

$$\text{Capacity retention rate (\%)} = 100 \times E(30)/E(0)$$

Some of the components contained in the positive electrode mixture layers and evaluation results are shown in Table 1. Note that, in Table 1, the adhesion of the positive electrode mixture layers, the DC internal resistance of the batteries, and the energy density of the batteries are expressed by relative values when measurement results of the positive electrode PC1 and the battery C1 are taken to be 100%.

[Table 1]

| Battery | Positive electrode slurry/Positive electrode | Average particle diameter of active material particles ($\mu$m) | Amount of addition of boron compound (%) | Conductive material | Dispersant | Weight average molecular weight of PVDF | Viscosity change rate of slurry (%) | Adhesion of positive-electrode mixture layer (%) | DC internal resistance of battery (%) | Energy density of battery (%) | Capacity retention rate of battery (%) |
|---|---|---|---|---|---|---|---|---|---|---|---|
| A1 | SA1/PA1 | 4 | 2 | CNT | H-NBR | 1,400,000 | 97.5 | 124 | 69 | 100 | 96 |
| A2 | SA2/PA2 | 4 | 2 | CNT | H-NBR | 1,100,000 | 104.0 | 80 | 64 | 100 | 96 |
| A3 | SA3/PA3 | 4, 17 | 2 | CNT | H-NBR | 1,400,000 | 102.8 | 148 | 63 | 110 | 96 |
| A4 | SA4/PA4 | 4 | 2 | CNT | H-NBR | 800,000 | 98 | 40 | 80 | 100 | 96 |
| C1 | SC1/PC1 | 4 | 2 | AB | Not used | 1,400,000 | 304.4 | 100 | 100 | 100 | 90 |
| C2 | SC2/PC2 | 4 | 2 | CNT | Not used | 1,400,000 | 400 | 115 | 73 | 100 | 91 |
| C3 | SC3/PC3 | 4 | 0 | AB | Not used | 1,400,000 | 250 | 120 | 123 | 98 | 70 |
| C4 | SC4/PC4 | 12 | 2 | CNT | H-NBR | 1,400,000 | 105.6 | 162 | 78 | 103 | 95 |
| C5 | SC5/PC5 | 12 | 2 | CNT | Not used | 1,400,000 | 109.1 | 156 | 79 | 103 | 95 |
| C6 | SC6/PC6 | 12 | 2 | AB | Not used | 1,400,000 | 103.2 | 180 | 79 | 103 | 94 |

CNT: carbon nanotubes AB: acetylene black

H-NBR: hydrogenated nitrile rubber

The batteries A1 to A4 and the positive electrode slurries SA1 to SA4 and the positive electrodes PA1 to PA4 used in the manufacture of those batteries are batteries, positive electrode slurries, and positive electrodes according to the present disclosure. The batteries C1 to C6 and the positive electrode slurries SC1 to SC6 and the positive electrodes PC1 to PC6 used in the manufacture of those batteries are comparative examples.

As the value of the viscosity change rate of slurry shown in Table 1 becomes larger, the viscosity of the slurry tends to become higher. Also, the value of the viscosity change rate significantly smaller than 100% indicates sedimentation of the positive-electrode active material. Production stability decreases in both of these cases. The closer the change rate is to 100%, the better dispersibility and dispersion stability are. A larger value of the adhesion of the positive electrode mixture layer indicates a higher degree of adhesion. If a conductive material that is likely to agglomerate, such as carbon nanotubes, is used, dispersibility of the materials contained in the slurry tends to decrease. If the dispersibility is low, uniform positive electrode mixture layers are not formed, and battery characteristics deteriorate. Also, if the dispersibility is low, it may become difficult to form the positive electrode mixture layers. In particular, if the value of the viscosity change rate is lower than 70% or higher than 120%, the productivity decreases significantly.

As shown in Table 1, the positive electrode slurries SA1 to SA4 according to the present disclosure had high dispersibility and were stable. Accordingly, it was possible to manufacture the positive electrodes easily and stably. Moreover, the batteries A1 to A4 according to the present disclosure had low DC internal resistances and high capacity retention rates. This is presumably because of a combined effect of the specific components described above. Also, the positive electrodes PA1 and PA3 according to the present disclosure had high degrees of adhesion of the positive electrode mixture layers.

[Industrial Applicability]

The present disclosure is applicable to a positive electrode for a nonaqueous electrolyte secondary battery and a nonaqueous electrolyte secondary battery. The secondary battery according to the present disclosure is applicable to various uses, and is preferably used as a main power source of a mobile communication device, portable electronic device, or the like, for example.

Although the present invention has been described in terms of the presently preferred embodiment, it is to be understood that such a disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications that fall within the true spirit and scope of the invention.

[Reference Signs List]

1: electrode group, 2: positive electrode lead, 3: negative electrode lead, 4: battery case, 5: sealing plate, 6: negative electrode terminal, 7: gasket, 8: sealing plug, 10: secondary battery (nonaqueous electrolyte secondary battery)

**Claims**

1.  A positive electrode for a nonaqueous electrolyte secondary battery, comprising:

    a positive electrode current collector and a positive electrode mixture layer disposed on the positive electrode current collector,
    wherein the positive electrode mixture layer contains active material particles having an average particle diameter less than 5 $\mu$m, a conductive material, a dispersant, and a binder,
    the active material particles include composite oxide particles and a surface modification layer formed on surfaces of the composite oxide particles and containing a boron compound,
    the composite oxide particles are particles of a lithium transition metal composite oxide,
    the conductive material includes a carbon material,
    the dispersant includes nitrile group-containing rubber, and
    the binder includes a fluorine-containing polymer.

2.  The positive electrode according to claim 1, wherein the carbon material is carbon nanotubes.

3.  The positive electrode according to claim 2, wherein the carbon nanotubes have a BET specific surface area of 200 m$^2$/g or more.

17

4. The positive electrode according to claim 1 or 2, wherein the fluorine-containing polymer has a weight average molecular weight of 1,000,000 or more.

5. The positive electrode according to claim 1 or 2, wherein, in the active material particles, a molar quantity of the boron compound contained in the surface modification layer is 1.0 to 3.0% of a total molar quantity of metal elements other than lithium included in the lithium transition metal composite oxide.

6. A nonaqueous electrolyte secondary battery comprising the positive electrode according to claim 1 or 2.

7. A positive electrode slurry for a positive electrode of a nonaqueous electrolyte secondary battery, the positive electrode slurry comprising:

active material particles having an average particle diameter less than 5 μm, a conductive material, a dispersant, a binder, and a liquid medium,
wherein the active material particles include composite oxide particles and a surface modification layer formed on surfaces of the composite oxide particles and containing a boron compound,
the composite oxide particles are particles of a lithium transition metal composite oxide,
the conductive material includes a carbon material,
the dispersant includes nitrile group-containing rubber, and
the binder includes a fluorine-containing polymer.

8. The positive electrode slurry according to claim 7, wherein the carbon material is carbon nanotubes.

FIG. 1

## INTERNATIONAL SEARCH REPORT

| International application No. |
| --- |
| **PCT/JP2023/032093** |

| | |
| --- | --- |
| **A.  CLASSIFICATION OF SUBJECT MATTER** | |

*H01M 4/131*(2010.01)i; *H01M 4/1391*(2010.01)i; *H01M 4/36*(2006.01)i; *H01M 4/62*(2006.01)i
FI:   H01M4/131; H01M4/1391; H01M4/36 C; H01M4/62 Z

According to International Patent Classification (IPC) or to both national classification and IPC

| | |
| --- | --- |
| **B.  FIELDS SEARCHED** | |

Minimum documentation searched (classification system followed by classification symbols)

H01M4/131; H01M4/1391; H01M4/36; H01M4/62

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| | |
| --- | --- |
| **C.  DOCUMENTS CONSIDERED TO BE RELEVANT** | |

| Category* | Citation of document, with indication, where appropriate, of the relevant passages | Relevant to claim No. |
| --- | --- | --- |
| Y | JP 2022-99288 A (TOYO INK SC HOLDINGS CO., LTD.) 04 July 2022 (2022-07-04) paragraphs [0160]-[0191] | 1-8 |
| Y | JP 2021-150051 A (PANASONIC CORP.) 27 September 2021 (2021-09-27) claims 1-12, paragraphs [0063]-[0068] | 1-8 |
| A | JP 2015-115106 A (SAMSUNG SDI CO., LTD.) 22 June 2015 (2015-06-22) examples, etc. | 1-8 |
| P, A | WO 2022/210976 A1 (ZEON CORP.) 06 October 2022 (2022-10-06) examples, etc. | 1-8 |

☐ Further documents are listed in the continuation of Box C.          ☑ See patent family annex.

| | |
| --- | --- |
| *    Special categories of cited documents: | "T"  later document published after the international filing date or priority date and not in conflict with the application but cited to understand the principle or theory underlying the invention |
| "A"  document defining the general state of the art which is not considered to be of particular relevance | |
| "E"  earlier application or patent but published on or after the international filing date | "X"  document of particular relevance; the claimed invention cannot be considered novel or cannot be considered to involve an inventive step when the document is taken alone |
| "L"  document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&"  document member of the same patent family |

| Date of the actual completion of the international search | Date of mailing of the international search report |
| --- | --- |
| **09 November 2023** | **21 November 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/032093**

| Patent document cited in search report | | | Publication date (day/month/year) | Patent family member(s) | | | Publication date (day/month/year) |
|---|---|---|---|---|---|---|---|
| JP | 2022-99288 | A | 04 July 2022 | WO | 2022/138496 | A1 | |
| | | | | paragraphs [0161]-[0192] | | | |
| | | | | CN | 116325201 | A | |
| JP | 2021-150051 | A | 27 September 2021 | US | 2021/0296638 | A1 | |
| | | | | claims 1-12, paragraphs [0065]-[0070] | | | |
| | | | | CN | 113410428 | A | |
| JP | 2015-115106 | A | 22 June 2015 | KR | 10-2015-0067049 | A | |
| | | | | examples, etc. | | | |
| WO | 2022/210976 | A1 | 06 October 2022 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7055476 B